(19) 

**Europäisches Patentamt**
**European Patent Office**
**Office européen des brevets**

(11) **EP 4 376 318 A1**

(12) **EUROPEAN PATENT APPLICATION**

(43) Date of publication:
**29.05.2024 Bulletin 2024/22**

(21) Application number: **23162501.3**

(22) Date of filing: **17.03.2023**

(51) International Patent Classification (IPC):
***H04B 7/06*** (2006.01)

(52) Cooperative Patent Classification (CPC):
**H04B 7/0691; H04B 7/0689**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2022 TW 111144590**

(71) Applicant: **Wistron Corporation**
**New Taipei City 22181 (TW)**

(72) Inventor: **Chen, Chih-Ming**
**22181 New Taipei City (TW)**

(74) Representative: **Straus, Alexander**
**2K Patent- und Rechtsanwälte - München**
**Keltenring 9**
**82041 Oberhaching (DE)**

Remarks:
Amended claims in accordance with Rule 137(2)
EPC.

(54) **PLANNING METHOD AND COMMUNICATION DEVICE THEREOF**

(57) A planning method and communication device thereof are provided. The planning method for a network includes generating a constrained causal graph according to observation data of a plurality of communication devices and performing finite domain representation planning by using the constrained causal graph to generate action data related to how to configure a plurality of antenna elements. A plurality of causal variables of the constrained causal graph and a causal structure of the constrained causal graph are determined together. The plurality of antenna elements are divided into a plurality of groups according to the action data. One of the plurality of groups adopts spatial diversity, single-user multiplexing, multi-user multiplexing, single-user beamforming, or multi-user beamforming.

FIG. 1

**Description**

Field of the Invention

The present invention relates to a planning method and a communication device thereof, and more particularly, to a planning method and a communication device thereof which improve flexibility and efficiency.

Background of the Invention

Multiple-input multiple-output (MIMO) communication technology includes spatial diversity, spatial multiplexing, and beamforming. Spatial diversity improves system reliability by sending the same data across different propagation paths. Spatial multiplexing improves throughput by transmitting multiple messages simultaneously without interfering with one another since they are separated in space. Beamforming improves spectral efficiency by providing a better signal-to-noise ratio (SNR). However, conventionally a MIMO smart antenna device only have one of the functions (i.e., spatial diversity, spatial multiplexing, and beamforming), which limits flexibility and efficiency. Accordingly, in terms of how to improve flexibility and efficiency, there is still room for improvement when it comes to MIMO smart antenna devices.

Summary of the Invention

It is therefore a primary objective of the present invention to provide a planning method and a communication device thereof to improve flexibility and efficiency.

An embodiment of the present invention discloses a planning method. The planning method for a network comprises generating a constrained causal graph according to observation data of a plurality of communication devices, wherein a plurality of causal variables of the constrained causal graph and a causal structure of the constrained causal graph are determined together; and performing finite domain representation planning by using the constrained causal graph to generate action data related to how to configure a plurality of antenna elements, wherein the plurality of antenna elements are divided into a plurality of groups according to the action data, and one of the plurality of groups adopts spatial diversity, single-user multiplexing, multi-user multiplexing, single-user beamforming, or multi-user beamforming.

An embodiment of the present invention discloses a communication device, comprising a storage circuit configured to store instructions, and a processing circuit coupled to the storage device, configured to execute the instructions stored in the storage circuit. The instructions comprise generating a constrained causal graph according to observation data of a plurality of communication devices, wherein a plurality of causal variables of the constrained causal graph and a causal structure of the constrained causal graph are determined together; and performing finite domain representation planning by using the constrained causal graph to generate action data related to how to configure a plurality of antenna elements, wherein the plurality of antenna elements are divided into a plurality of groups according to the action data, and one of the plurality of groups adopts spatial diversity, single-user multiplexing, multi-user multiplexing, single-user beamforming, or multi-user beamforming.

These and other objectives of the present invention will no doubt become obvious to those of ordinary skill in the art after reading the following detailed description of the preferred embodiment that is illustrated in the various figures and drawings.

Brief Description of the Drawings

FIG. 1 and FIG. 2 are schematic diagrams of a network system and a communication device according to embodiments of the present invention.
FIG. 3 is a schematic diagram of grounding data and part of a causal graph according to an embodiment of the present invention.
FIG. 4 is a schematic diagram of a mapping of a causal subgraph according to an embodiment of the present invention.
FIG. 5 is a schematic diagram of causal subgraphs and a causal graph according to an embodiment of the present invention.
FIG. 6 is a schematic diagram of states and part of a constrained causal graph according to an embodiment of the present invention.
FIG. 7 is a schematic diagram of a planning tree according to an embodiment of the present invention.
FIG. 8 is a schematic diagram of Bayesian Optimization for a one-dimensional problem according to an embodiment of the present invention.
FIG. 9 is a schematic diagram of Bayesian Optimization, Causal Bayesian Optimization, and Dynamic Causal Bayesian Optimization.
FIG. 10 is a schematic diagram of part of a network system according to an embodiment of the present invention.

Detailed Description

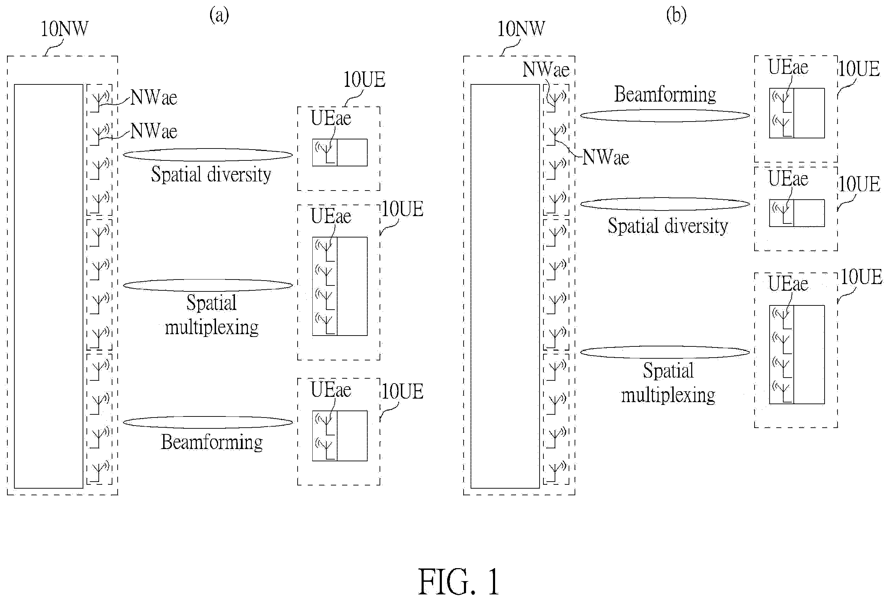

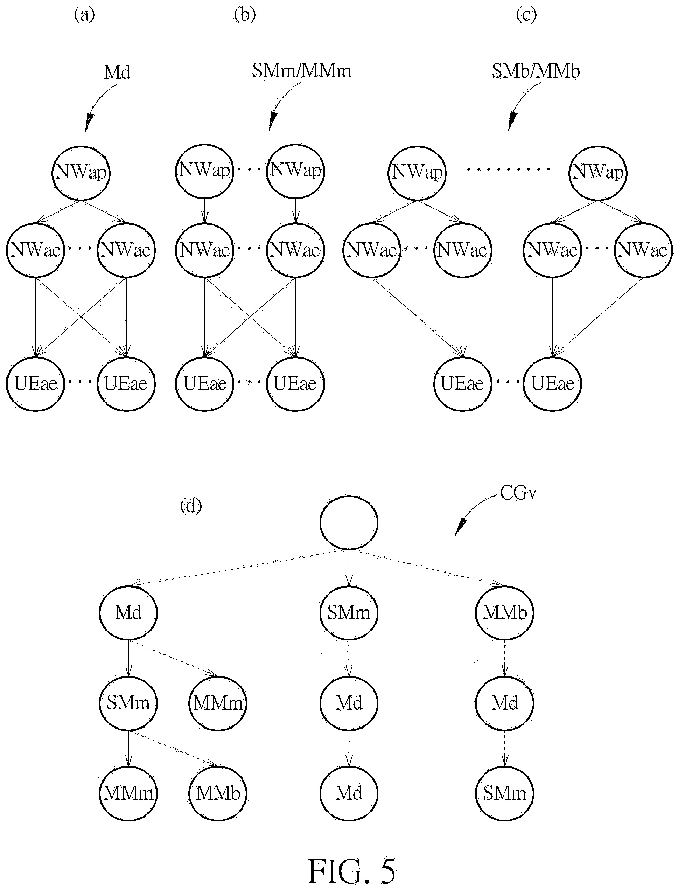

FIG. 1 is a schematic diagram of a network system 10NW and a plurality of communication devices 10UE according to an embodiment of the present invention. The network system 10NW (i.e., network side) and the communication devices 10UE (i.e., client side) may respectively include a plurality of antenna elements Nwae and UEae. The network system 10NW may use an algorithm (e.g., a planning method to be elaborated below) to divide the antenna elements Nwae into groups according to channel properties (e.g., channel state information (CSI) or other information from the communication device(s) 10UE), such that a group of antenna elements from the antenna elements Nwae apply spatial diversity, single-user multiplexing, multi-user multiplexing, single-user beamforming, or multi-user beamforming for transmission (e.g., as shown in (a), (b), or (c) of FIG. 5). For example, the network system 10NW may at least switch to (or be operated in) a mode shown in (a) or (b) of FIG. 1. In addition, the number of groups for the antenna elements Nwae may depend on the number of the communication devices 10UE (i.e., there may be more groups than those shown in FIG. 1).

Therefore, the network system 10NW may be regarded/serve as a multifunctional MIMO smart antenna device, which may continuously re-plan the antenna element(s) Nwae to provide separate functions to the communication device(s) 10UE as per channel properties of communication links. Flexibility and efficiency can thus be greatly improved.

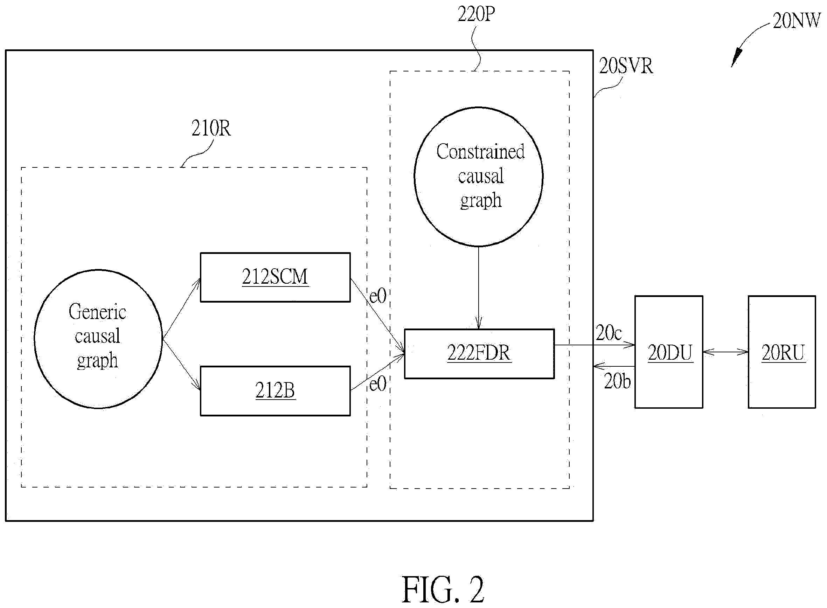

FIG. 2 is a schematic diagram of a network system 20NW according to an embodiment of the present invention. The network system 20NW may include a plurality of communication devices (e.g., a server 20SVR, a distributed unit (DU) 20DU and a radio unit (RU) 20RU). The network system 20NW may be used to implement the network system 10NW.

In one embodiment, a planning method of the present invention may be used in (or performed by) the network system 20NW (for example but not limited thereto, the server 20SVR,), and may include steps as follows:

Step S200: Start.
Step S202: Generate a constrained causal graph according to observation data 20b of the communication device(s) 10UE. A plurality of causal variables of the constrained causal graph and a causal structure of the constrained causal graph are determined together. Thereafter, go to Step S204.
Step S204: Perform finite domain representation (FDR) planning according to the constrained causal graph to generate action data 20c about how to configure the antenna element(s) Nwae. The antenna elements Nwae are divided into a plurality of groups according to the action data 20c. Each group is operated in one of spatial diversity, single-user multiplexing, multi-user multiplexing, single-user beamforming, and multi-user beamforming.
Step S206: End.

The server 20SVR may include a causal reasoning module 210R and a causal planning module 220P. In step S202, the causal planning module 220P may receive the observation data 20b from the distributed unit 20DU. The observation data 20b may be related to channel properties (e.g., CSI or other information from the communication device(s) 10UE). In one embodiment, the causal planning module 220P may convert the observation data 20b into grounding data. In an embodiment, the observation data 20b may serve as the grounding data as well.

In step S202, the causal planning module 220P may derive/obtain a causal graph from the grounding data. The causal planning module 220P may choose a causal model for optimization based on maximum a posterior (MAP) and point estimation so as to derive/obtain a causal graph. Accordingly, causal variables of the causal graph (e.g., the number of the causal variables, which attributes a causal variable has, or the number of the attributes of a causal variable) and a causal structure of the causal graph (e.g., how attributes connect to each other) are determined/found/created together (at a time or in one go). Deciding the causal variables and the causal structure simultaneously/parallelly may avoid problems incurred by deciding first causal variables and then a causal structure.

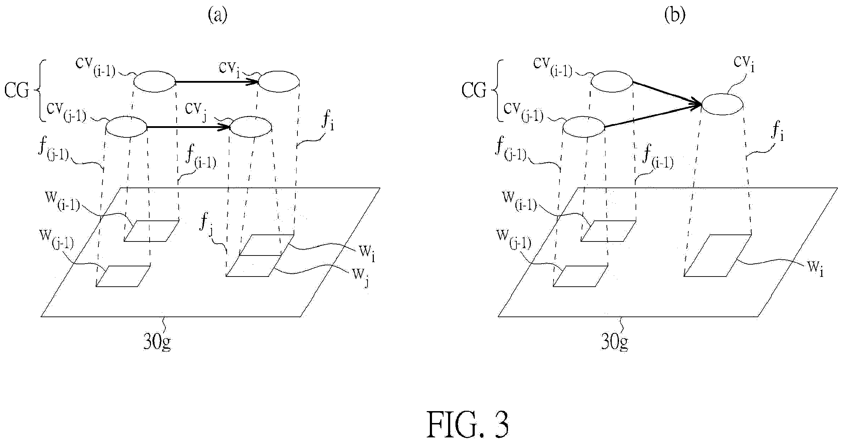

For example, FIG. 3 is a schematic diagram of grounding data 30g and part of a causal graph CG according to an embodiment of the present invention. In FIG. 3, (a) and (b) illustrate two possibilities of the grounding data 30g and the causal graph CG. Here, i, j are positive integers. In FIG. 3, a causal structure of the causal graph CG may present the relationship between causal variables (e.g., $cv_{(i-1)}$, $cv_i$, $cv_{(j-1)}$, and $cv_j$). Observation functions $f_{(i-1)}$, $f_i$, $f_{(j-1)}$, and $f_j$ may be used to map subdata $w_{(i-1)}$, $w_i$, $w_{(j-1)}$, and $w_j$ of the grounding data 30g to the causal variables $cv_{(i-1)}$, $cv_i$, $cv_{(j-1)}$, and $cv_j$ so as to show the relationship between the causal variables $cv_{(i-1)}$, $cv_i$, $cv_{(j-1)}$, $cv_j$ and the subdata $w_{(i-1)}$, $w_i$, $w_{(j-1)}$, $w_j$ of the grounding data 30g respectively. The mapping here is on a basis of the corresponding subdata (e.g., the subdata $w_{(i-1)}$, $w_i$, $w_{(j-1)}$, $w_j$) (e.g., a framed area in FIG. 3) instead of the (whole) grounding data 30g.

In one embodiment, a posterior probability $P(f_i, C|w_i)$ of assigning the subdata $w_i$ of the grounding data 30g to the observation function $f_i$ and a causal structure C of the causal graph CG may be maximized by the causal planning module 220P so as to determine/derive/select the corresponding causal structure C and the corresponding causal variable cv; based on the subdata $w_i$ of the grounding data 30g. Accordingly, inference of the causal model may be described by combining Bayesian network (e.g., for the causal structure) with the observation functions (e.g., $f_{(i-1)}$, $f_i$, $f_{(j-1)}$, and $f_j$). It is noteworthy that causal variables (e.g., $cv_{(i-1)}$, $cv_i$, $cv_{(j-1)}$, and $cv_j$) and the corresponding causal structure (e.g., C) of the corresponding causal graph (e.g., CG) are obtained/determined together (namely, the causal variables (e.g., $cv_{(i-1)}$, $cv_i$, $cv_{(j-1)}$, and $cv_j$) are learned along/together with the causal structure (e.g., C)), so the causal variables (e.g., $cv_{(i-1)}$, $cv_i$, $cv_{(j-1)}$, and $cv_j$) and the causal structure (e.g., C) may interact/affect/constrain each other.

In one embodiment, the posterior probability $P(f_i, C|w_i, Int)$ may satisfy $P(f_i, C|w_i, Int) \propto P(f_i, C)$

$P(w_i|f_i, C, \text{Int})$ according to the Bayesian rule, where $f_i$ may denote the corresponding observation function, C may denote the corresponding causal structure, $w_i$ may denote part of the grounding data 30g (e.g., subdata), and Int may denote intervention. In one embodiment, the posterior probability $P(f_i, C|w_i)$ may be proportional to $P(f_i, C)$ $P(w_i|f_i, C)$ or

$$\prod_{t=0}^{T} P(w_{i,t}|s_{t-1}, C, f_i)^{(T-t)^{-\gamma}}$$

, where $s_{t-1}$ may denote state(s) (of all causal variables) at a time instant t-1, T may denote a current/present time instant, and $\gamma$ may be 0.5, but is not limited thereto. In one embodiment,

$P(w_i|f_i, C)$ may be $\prod_{t=0}^{T} P(w_{i,t}|s_{t-1}, C, f_i)$. In one embodiment, $P(w_{i,t}|s_{t-1}, C, f_i)$ may be

$$\frac{1}{|R_{s_t}|} \prod_{i=1}^{Ncv} P(s_{i,t}|s_{t-1}, C)$$

or

$$\sum_{s_t} P(w_{i,t}|s_t, f_i) \prod_{i=1}^{Ncv} P(s_{i,t}|s_{t-1}, C)$$

,

where $s_{i,t}$ may denote the state of the causal variable $cv_i$ at a time instant t, $s_t$ may denote the state(s) at the time instant, Ncv may denote the total number of all causal variables (e.g., including the causal variables $cv_{(i-1)}$, $cv_i$, $cv_{(j-1)}$, and $cv_j$), Ncv is a positive integer, and $R_{s_t}$ may denote the data amount of the subdata $w_i$ which is compatible with the state $s_i$ of the causal variable $cv_i$ within the grounding data 30g. In one embodiment, the present invention may select/find the causal variable $cv_i$ that minimizes the data amount $R_{s_t}$, such that data within the grounding data 30g which are frequently used (e.g., the subdata $w_i$) may be cut into finer pieces than those which are rarely used.

As set forth above, Bayesian probability mechanism may combine the number of causal variables (e.g., including the causal variables $cv_{(i-1)}$, $cv_i$, $cv_{(j-1)}$, and $cv_j$), states of the causal variables, a causal structure of the causal variables, or observation functions for the causal variables (e.g., including the observation functions $f_{(i-1)}$, $f_i$, $f_{(j-1)}$, and $f_j$) and draw relevant joint inferences to explain/interpret the grounding data 30g, thereby creating the causal graph CG. The causal variables (e.g., including the causal variables $cv_{(i-1)}$, $cv_i$, $cv_{(j-1)}$, and $cv_j$) of the causal graph CG (or the number of the causal variables) and a causal structure (e.g., C) are determined at the same time; therefore, the causal planning module 220P may differentiate (a) from (b) of FIG. 3, and vice versa.

As shown in FIG. 3, each causal variable (e.g., $cv_i$) may correspond to an observation function (e.g., $f_i$). In one embodiment, an observation function (e.g., $f_i$) may be calculated/derived using a causal semantic generative (CSG) model so as to predict low-dimensional state attributes (e.g., attribute(s) of the state of the causal var-

iable $cv_i$) from high-dimensional environmental variables (e.g., the grounding data 30g). When causal variables (e.g., $cv_{(i-1)}$, $cv_i$, $cv_{(j-1)}$, and $cv_j$) are manually defined (e.g., (nonautomatically and individually) by domain expert(s) or defined automatically using a program with rules described by domain expert(s)), each causal variable

(e.g., $cv_i$) may have a dedicated CSG observation function to ground the causal variable onto the corresponding subdata (e.g., the subdata $w_i$) (e.g., the framed area in FIG. 3). In other words, subdata (e.g., the subdata $w_{(i-1)}$, $w_i$, $w_{(j-1)}$, or $w_j$ corresponding to the framed area in FIG. 3) is defined/determined according to the definition of specific causal variables by domain expert(s). Moreover, the CSG model may avoid deeming variation factor(s) cause(s) of a causal variable (e.g., $cv_i$), and may correctly determine semantic factor(s) to be the cause(s) of the causal variable. In one embodiment, variation factor(s) and semantic factor(s) may constitute/belong to observation data. In one embodiment, the CSG model is primarily based on causal invariance principle and involves variational Bayes.

In one embodiment, the observation function $f_i$ may satisfy $s_{i,t}=f_i(w_{i,t})$. In one embodiment, the observation function $f_i$ may be implemented using multivariate Gaussian distribution: For example, the observation function $f_i$ may satisfy

$$f_i(w_i, z) = N\left(\begin{pmatrix} w_i \\ z \end{pmatrix} \middle| \begin{pmatrix} \mu_{w_i} \\ \mu_z \end{pmatrix}, \Sigma\right)$$

. Alternatively, the observation function $f_i$ may be related to

$$N\left(\begin{pmatrix} w_i \\ z \end{pmatrix} \middle| \begin{pmatrix} \mu_{w_i} \\ \mu_z \end{pmatrix}, \Sigma\right)$$

, where z may denote data (which does not contribute to the causal variable $cv_i$) within the grounding data 30g, $\mu_{w_i}$, $\mu_v$ may denote means fixed as zero vectors, $\Sigma$ may be parameterized by Cholesky decomposition to satisfy, for example, $\Sigma = LL^T$. The matrix L may be a lower-triangular matrix with positive diagonals and may, for example, be parameterized

to satisfy $L = \begin{pmatrix} L_{w_iw_i} & 0 \\ M_{zw_i} & L_{zz} \end{pmatrix}$. Each of the matrixes $L_{w_iw_i}$, $L_{zz}$ may be smaller lower triangular matrixes. The matrix $M_{zw_i}$ may be any arbitrary matrix. Each of the matrixes $L_{w_iw_i}$, $L_{zz}$ may be parameterized by a summation of positive diagonal elements (guaranteed via an exponential map) and a lower triangular matrix (without positive diagonal elements).

In one embodiment, the relationship between causal variables (e.g., $cv_i$) and subdata (e.g., $w_i$) may be unknown, but the causal variables may be predicted/inferred from the subdata using the CSG model. For example, there may be a domain-specific prior between a semantic factor and a variation factor. Alternatively, an independent prior may be introduced between a semantic factor and a variation factor to reflect intervention so as to improve out-of-distribution generalization performance. Alternatively, a prior may be introduced between a semantic factor and a variation factor to reflect intervention according to causal invariance principle so as to leverage unsupervised data. Alternatively, the present invention may fit the CSG model to subdata by maximizing likelihood, perform calculation using variational inference and evidence lower bound (ELBO), and use Monte Carlo to estimate expectations after applying reparameterization tricks.

In step S202, the causal planning module 220P may find other possible paths/branches to serve as alternatives. For example, the causal variable $cv_{(i-1)}$ in (a) of FIG. 3 may serve as the cause of the causal variable $cv_i$, and the causal planning module 220P may also find another causal variable to replace the causal variable $cv_{(i-1)}$ (i.e., serving as the cause of the causal variable $cv_i$). Causal variable(s) (e.g., $cv_{(i-1)}$) of a causal graph (e.g., CG) and other causal variable(s) used as alternative(s) to the causal variable(s) (e.g., $cv_{(i-1)}$) may constitute a complete causal graph.

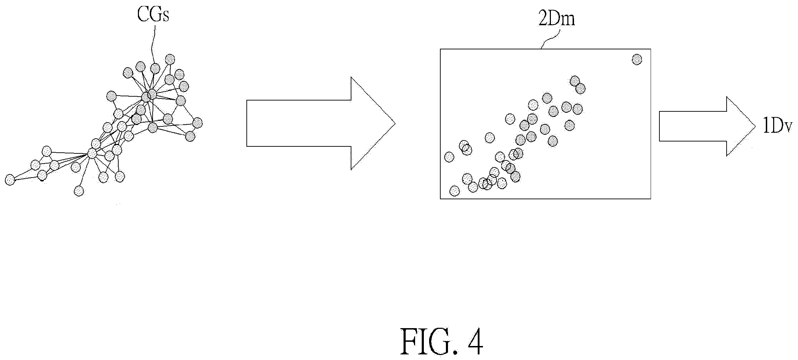

In one embodiment, the present invention may leverage causal ladder level 3 (e.g., Structural Causal Model (SCM)) to find alternatives in a causal graph. In an embodiment, a deep structured semantic model (DSSM) may be used to find alternatives. In one embodiment, all causal subgraphs (or a causal graph) predefined by domain expert(s) may be mapped to a semantic space (e.g., by a DSSM model), and then the present invention may search for the nearest neighbor(s) (e.g., another causal subgraph) of a causal subgraph in question (to serve as alternative(s)) according to the distance function(s) (which may be implemented by relevance measured with cosine similarity) in semantic space. For example, as shown in FIG. 4, the causal subgraph CGs (or a causal graph) may be converted into a two-dimensional matrix 2Dm (i.e., two-dimensional features) using, for example, Graph Convolutional Network (GCN). Then, the two-dimensional matrix 2Dm may be converted into a one-dimensional vector 1Dv (i.e., one-dimensional features) using, for example, hashing layer(s), convolutional layer(s), pooling layer(s), maximum pooling layer(s), semantic layer(s), fully connected layer(s), or flatten layer(s). The causal subgraph CGs is thus represented by one-dimensional features converted from the output of GCN represented by two-dimensional features. Afterwards, a one-dimensional vector bearing the smallest (or smaller) cosine similarity to the one-dimensional vector 1Dv may be selected/searched from the semantic space to serve as an alternative.

For example, FIG. 5 is a schematic diagram of causal subgraphs Md, SMm, MMm, SMb, MMb, and a causal graph CGv according to an embodiment of the present invention. In FIG. 5, (a) illustrates the causal subgraph Md corresponding to spatial diversity, (b) illustrates the causal subgraph SMm corresponding to single-user multiplexing or the causal subgraph MMm corresponding to multi-user multiplexing, and (c) illustrates the causal subgraph SMb corresponding to single-user beamforming or the causal subgraph MMb corresponding to multi-user beamforming. The causal graph CGv in (d) of FIG. 5 is formed from a plurality of causal subgraphs (e.g., the causal subgraph Md, SMm, MMm, SMb, or MMb). The causal planning module 220P may convert the causal subgraphs Md, SMm, MMm, SMb, and MMb into one-dimensional vectors (one by one). In one embodiment, the cosine similarity between the one-dimensional vector corresponding to the causal subgraph Md in the first row of the causal graph CGv and the one-dimensional vector corresponding to the causal subgraph SMm (or MMb) in the first row of the causal graph CGv may be small, so the causal subgraph SMm (or MMb) may be used as an alternative to the causal subgraph Md. Similarly, the causal subgraph MMm in the second row of the causal graph CGv may serve as an alternative to the causal subgraph SMm in the second row of the causal graph CGv; the causal subgraph MMb in the third row of the causal graph CGv may serve as an alternative to the causal subgraph MMm in the third row of the causal graph CGv. In other words, the causal variables (e.g., Md) of the causal graph and their alternatives (e.g., the causal subgraph SMm serving as an alternative to the causal subgraph Md) may constitute the complete causal graph CGv.

In addition, a causal subgraph (e.g., Md, SMm, MMm, SMb, or MMb) may be regarded/treated as a composite causal variable in a causal graph and includes a plurality of normal causal variables (e.g., any of the antenna units NWae, Ueae and the antenna ports NWap shown in (a), (b), or (c) of FIG. 5). The number of the antenna units NWae, Ueae, or the antenna ports NWap may vary according to different design considerations. In one embodiment, the observation data 20b may be mapped to causal subgraphs (e.g., the causal subgraph Md in the first row, the causal subgraph SMm in the second row, or the causal subgraph MMm in the third row of the causal graph CGv) in terms of each communication device (e.g., 10UE) according to, for example, channel properties or software/hardware implementation. In one embodiment, causal subgraphs in different rows of the causal graph CGv correspond to different communication devices. For example, the causal subgraph in the first row of the causal graph CGv (e.g., the causal subgraph Md) corresponds to a communication device 10UE, and the causal subgraph in the second row of the causal graph CGv (e.g., the causal subgraph SMm) corresponds to another communication device 10UE .

In step S202, the causal planning module 220P may add constraints to a causal graph (e.g., CG or CGv) to convert the causal graph into a constrained causal graph, such that there are causal relationships between (composite) causal variables of the constrained causal graph (e.g., the causal relationship between the causal variables $cv_{(i-1)}$ and cv; of the causal graph CGor the causal relationship between the composite causal variables Md and SMm of the causal graph CGv), and the constrained causal graph also defines that a causal variable (e.g., the causal variable $cv_{(i-1)}$ or the composite causal variable Md) leads to another causal variable (e.g., the causal variable $cv_i$ or the composite causal variable SMm) based on an action. It is worth noting that there may be a causal relationship and an action between two composite causal variables, and there may be a causal relationship but no action between two normal causal variables of a composite causal variable.

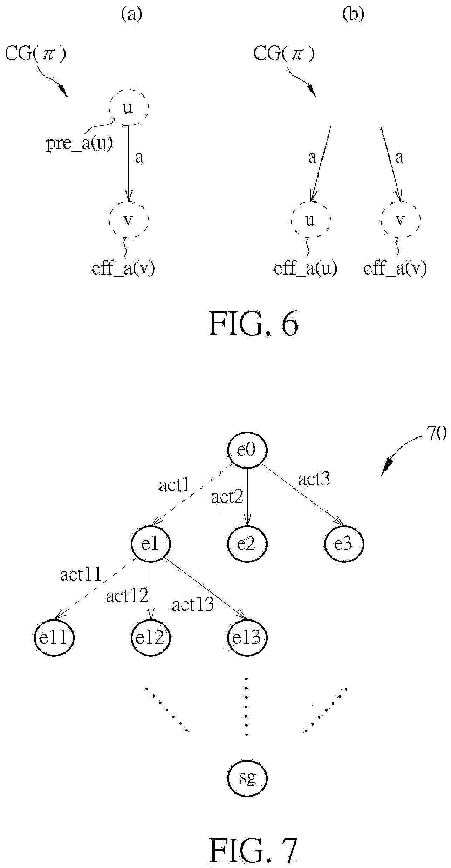

For example, FIG. 6 is a schematic diagram of states u, v and part of a constrained causal graph CG(Π) according to an embodiment of the present invention. In FIG. 6, (a) and (b) illustrate two possibilities of the constrained causal graph CG(Π). A FDR planning task may be Π = (V, A, c, I, G), where V may denote a finite set of state variables, A may denote a finite set of actions, and c may denote a loss function, I may denote an initial state, and G may denote a goal state. The constrained causal graph CG(Π) may be a directed graph with vertices V and an arcs/paths (e.g., a path (u, v)) if the state u is not equal to the state v and there exists an action a satisfying a ∈ A so that either "there exists a ∈ A so that a precondition pre_a (u) and an effect eff_a (v) are both defined", or "there exists a ∈ A so that an effect eff_a (u) and the effect eff_a (v) are both defined". There may be the path (u, v) between the states u and v. The precondition pre_a(u) may denote a (precondition) state of the vertex u (as a precondition) given the action a, as a precondition may define under which circumstances (e.g., state(s)) actions may be performed. The effect eff_a(v) may denote an (effect) state of the vertex v (as an effect) given the action a. Actions may change state(s) and generate new state(s) (i.e., produce certain effect(s)), thereby eventually achieving certain goal state.

As shown in FIG. 2, the causal planning module 220P may include a FDR planning module 222FDR. In step S204, the FDR planning module 222FDR may utilize a constrained causal graph (e.g., CG(Π)) to dynamically perform FDR planning. In an embodiment, a solution of FDR planning is a plan from an initial state (e.g., an initial state e0) to a goal state in a search space. In one embodiment, a solution of FDR planning may be a directed graph.

In one embodiment, in step S204, after the constrained causal graph is constructed/created using the algorithm, the constrained causal graph may be converted/translated into a domain file of Planning Domain Description Library (PDDL) (i.e., description of system) to perform Dynamic Causal Bayesian Optimization and FDR planning of the FDR planning module 222FDR. In other words, a domain file of the present invention may not be defined manually/artificially (e.g., provided by experts).

In one embodiment, a domain file may be configured to describe action(s), and a problem file may be configured to describe an initial state and a goal state.

In one embodiment, content of a domain file may include the following:

```
precond_1 ->action_1 ->effect_1
precond_2->action_2->effect_2
precond_n -> action_n -> effect_n
```

States precond_1 to precond_n may be used as preconditions. Action_1 to action_n may be actions. States effect_1 to effect_n may be used as effects. Here, n is a positive integer. The state effect_i may happen after action_i acts on the state precond_i. In one embodiment, precond_i->action_i->effect_i may correspond to part of a constrained causal graph (e.g., CG(Π)). For example, in the constrained causal graph CG(Π) shown in (a) of FIG. 6, the state u serving as a cause (i.e., a causal variable) may correspond to the precondition precond_i, and the state v serving as an effect/result (i.e., another causal variable) may correspond to the effect effect_i. In other words, a constrained causal graph may present a structure of states and actions.

In one embodiment, the effect effect_1 may be a cause of the state precond_3, and the effect effect_3 may be a cause of the state precond_7. Accordingly, a solution of FDR planning may at least include an (action) sequence of the actions action_1, action_3, action_7 but may not include, for example, the action action_2, or action_4 to action_6.

In step S204, when a planner of the FDR planning module 222FDR reads a domain file, the planner may generate the planning tree corresponding to the domain file (or the constrained causal graph). For example, FIG. 7 is a schematic diagram of a planning tree 70 according to an embodiment of the present invention. The planning tree 70 may be represented as a directed graph. Paths of the planning tree 70 (i.e., arrows in FIG. 7) are actions, and vertices of the planning tree 70 are states (i.e., causal variables). Each state may be represented by a set of state variables, and each action may be represented by a function that maps sets of state variables. Paths may show dependencies of states. In other words, composite causal variable(s) may be presented in the planning tree (e.g., 70); however, normal causal variable(s) has/have no corresponding action(s) and thus may not be presented in a planning tree (e.g., 70). For an action act1, the initial state e0 may be used as a precondition and a state e1 may be used as an effect. In terms of an action act11, an effect of the action act1 (i.e., the state e1) may be used as a precondition, and a state e11 may be used as an effect. The planning tree 70 may serve as a search space. A solution of the FDR planning module 222FDR may be an (ordered) sequence of actions in the planning tree 70 starting from the initial state e0 and ending at the goal state sg. For example, the branch of the action act1 is determined according to a current/present (environmental) state to not be a solution of the FDR planning module 222FDR, while the branches of actions act2 and act3 are determined to be a solution of the FDR planning module 222FDR. However, the present invention is not limited to thereto.

In one embodiment, the planner may perform a search using a search algorithm (such as best-first search, iterative deepening search, hill-climbing search, or greedy best-first search) to find a solution of the FDR planning module 222FDR.

In one embodiment, alternative(s) (e.g., causal variable(s) and its/their paths serving as alternative(s)) may constitute/correspond to a part of a planning tree (e.g., 70), and thus there are a plurality of paths/branches between the initial state e0 and the goal state sg. The planner may find the best solution of FDR planning based on Dynamic Causal Bayesian Optimization (or Bayesian optimization, or Causal Bayesian Optimization). Take Bayesian Optimization as an example. Bayesian Optimization is a black-box optimization algorithm for solving extremum problems of functions whose expressions are unknown. For example, B(cvP) = uef(cvP), where B() may represent the objective function, uef() may represent a function whose expression is unknown, and cvP may represent all (composite) causal variable(s) of a path/branch. In other words, the expression of the relationship function uef() among the objective function B() and the composite causal variable(s) cvP is unknown. The composite causal variable(s) cvP to maximize (or minimize) the objective function B() may be calculated by using Bayesian Optimization, which means to find which planning (or sequence of actions) of FDR planning is optimal. In one embodiment, the objective function B() is defined by domain expert(s) to determine which combination of composite causal variable(s) cvP (i.e., which path/branch) is more preferred.

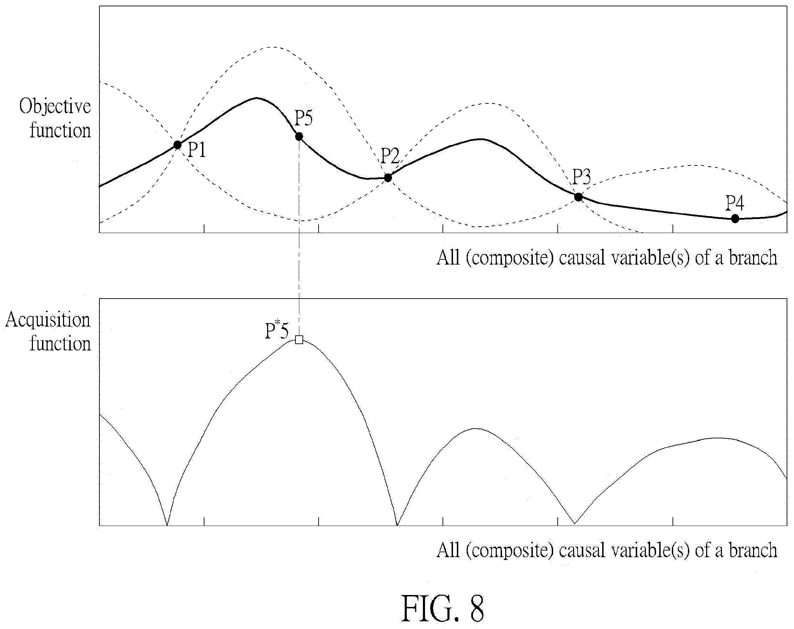

Since the expression of the relationship function uef() is unknown, Bayesian Optimization may roughly fit the relationship function uef() using partial/finite sampling points and leverage information of previous sampling point(s) to determine the next sampling point so as to find extremum point(s). For example, FIG. 8 is a schematic diagram of Bayesian Optimization for a one-dimensional problem according to an embodiment of the present invention, where the thick solid line represents estimated function values of the objective function B(), and the solid black points P1 to P5 represents sampling points which have been found, the area enclosed by two dotted lines represents the fluctuation range (centered on a mean value and proportional to a standard deviation) of the objective function B() at each point, and the thin solid line represents an acquisition function. The idea of Bayesian Optimization is to first generate an initial candidate solution set (e.g., the objective function and the composite causal variables corresponding to the solid black point P1), then search for the next sampling point (e.g., the solid black point P2), which may have an extreme value, based on sampling points in the initial candidate solution set, repeatedly search for the next sampling point (e.g., the solid black points P3-P5), which may have an extreme value, until the iteration terminates, and add all the found sampling points (e.g., the solid black points P1-P5) to the candidate solution set. Finally, a (global) extremum point is found from the sampling points of the candidate solution set as the solution of the problem (e.g., the objective function and the composite causal variables corresponding to the solid black point P5). Accordingly, the present invention may determine which path/branch is the best solution, using the found composite causal variables (from the sampling points of the candidate solution set).

Bayesian Optimization estimates mean value(s) and variance(s) of the true objective function based on the function values of the sampling points that have been found (e.g., the objective function corresponding to the solid black point P1) to determine the next sampling point (e.g., the solid black point P2) according to the sampling point already found (e.g., the solid black point P1). The acquisition function represented by the thin solid line in FIG. 8 may be constructed according to mean values and variances; that is, the acquisition function may be a function of mean values and variances. A relative extremum point of the acquisition function may correspond to the next sampling point of the objective function: For example, the point P*5 represented by the rectangular box in FIG. 8 is the maximum point of the acquisition function and may correspond to the next sampling point (i.e., the solid black point P5) of the objective function (according to the corresponding composite causal variable(s)).

The present invention may find the causal relationship between the objective function B() and the composite causal variable(s) cvP or the causal graph created with the objective function B() and the composite causal variable(s) cvP, and utilize Causal Bayesian Optimization for optimization. Since the causal intrinsic dimensionality of Causal Bayesian Optimization is given by the number of the composite causal variable(s) cvP, which are causes/parents of the objective function B(), rather than the number of causal variables which are causes of the composite causal variable(s) cvP, it may significantly improve the ability to reason about optimal decision making strategies. Furthermore, the present invention may extend to Dynamic Causal Bayesian Optimization, which may offer/account for the causal relationship between causal variables and the causal relationship may evolve/change over time, and thus facilitates in scenarios where all causal effects in a causal graph vary over time.

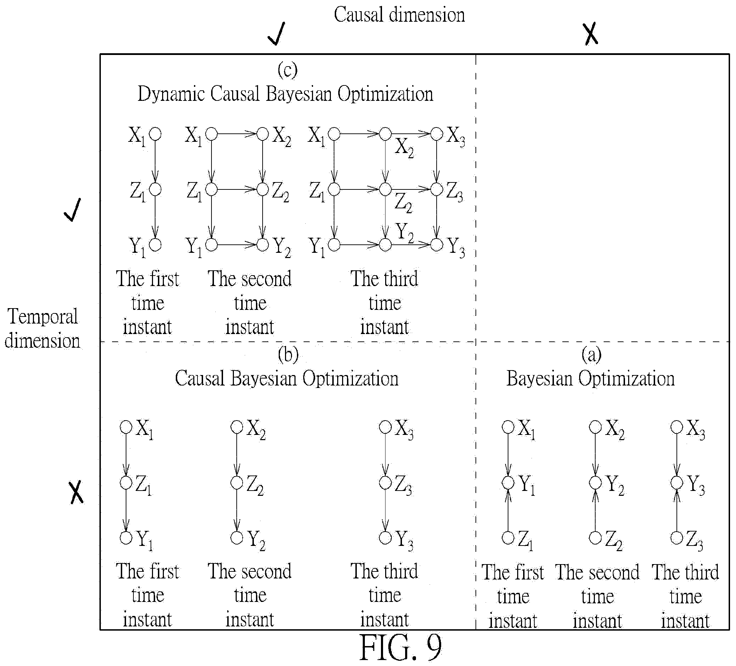

For example, FIG. 9 is a schematic diagram of Bayesian Optimization, Causal Bayesian Optimization, and Dynamic Causal Bayesian Optimization. In FIG. 9, $X_1$ to $X_3$ represent a causal variable at three different time instants. $Y_1$ to $Y_3$ represent another causal variable at three different time instants. $Z_1$ to $Z_3$ represent the other causal variable at three different time instants. However, the present invention is not limited thereto and may extend to more time instants or more causal variables. For example, in Dynamic Causal Bayesian Optimization, as shown in FIG. 9, the causal variable $Y_1$ at the

first time instant is a function of the causal variable $Z_1$ at the first time instant; therefore, the extreme value of the causal variable $Y_1$ (which may represent or correspond to the objective function B()) may be found by using only the causal variable $Z_1$, which is directly related to the causal variable $Y_1$, and the causal intrinsic dimensionality is 1. Similarly, the causal variable $Y_2$ at the second time instant is a function of the causal variable $Z_2$ at the second time instant and the causal variable $Y_1$ at the first time instant; therefore, the extreme value of the causal variable $Y_2$ (which may represent or correspond to the objective function B()) may be found by using only the causal variable $Y_1$ and $Z_2$, which are directly related to the causal variable $Y_2$, and the causal intrinsic dimensionality is 2. Similarly, the causal variable $Y_3$ at the third time instant is a function of the causal variable $Z_3$ at the third time instant and the causal variable $Y_2$ at the second time instant; therefore, the extreme value of the causal variable $Y_3$ (which may represent or correspond to the objective function B()) may be found by using only the causal variable $Y_2$ and $Z_3$, which are directly related to the causal variable $Y_3$, and the causal intrinsic dimensionality is 2. In other words, a causal variable serving as a dependent variable at a time instant is a function of causal variable(s) at previous time instant(s) (serving either as dependent or independent variable(s)), and therefore the extremum value of the former causal variable(s) (i.e., a causal variable serving as a dependent variable at a certain time instant) may be found by using only the latter causal variable(s) directly related to the former causal variable(s) (i.e., causal variable(s) serving either as dependent or independent variable(s) at previous time instant(s)).

In step S204, a causal subgraph (i.e., a composite causal variable) may be constructed/selected based on channel properties (e.g. CSI). If a channel requires high reliability, spatial diversity is preferable. If a channel requires high throughput, multiplexing is preferable. If a channel requires high gain and long range, beamforming is preferable. As for single-user and multi-user, they are decided by software/hardware implementation. In other words, the present invention may decide/determine which (dynamic) action (e.g., an action corresponding to the causal subgraph Md, SMm, MMm, SMb, or MMb) should be executed based on channel properties, output the action data 20c required by the causal subgraph(s) (e.g., Md, SMm, MMm, SMb, or MMb) to the distributed unit 20DU using the (dynamic) action according to channel properties. The distributed unit 20DU may transmit the action data 20c to the radio unit 20RU.

In one embodiment, the action data 20c may include or be related to a solution of FDR planning; for example, the action data 20c may include all actions in a solution of FDR planning. In one embodiment, the action data 20c may be related to the configuration of the antenna element(s) Nwae of the network system 10NW. The present invention may use breadth first traversal or depth first traversal to construct a causal subgraph (or expand a planning tree). The present invention may further traverse the nodes of the causal subgraph to determine the entire structural relationship, such that the antenna element(s) NWae may be configured/arranged accordingly. The action data 20c may be obtained/found by performing breadth first traversal or depth first traversal on the causal subgraph (e.g., Md, SMm, MMm, SMb, or MMb). For example, for a certain scenario, the causal planning module 220P may plan/assign the causal subgraphs Md, SMm, and MMm of the leftmost (vertical) branch/column of the causal graph CGv shown in FIG. 5 to the three communication devices 10UE shown in FIG. 1, and the action data 20c may make the three different groups of the antenna elements Nwae (respectively corresponding to the three communication devices 10UE) adopt spatial diversity, single-user multiplexing, and multi-user multiplexing respectively.

In step S204, the causal reasoning module 210R may provide the initial state e0 to the causal planning module 220P. The causal planning module 220P may use the initial state e0 as a starting point and rely on the constrained causal graph to perform FDR planning.

As shown in FIG. 2, the causal reasoning module 210R may include a structural causal model (SCM) module 212SCM or a Bayesian network module 212B. In step S204, the causal reasoning module 210R may input a (generic) causal graph to the SCM module 212SCM or the Bayesian network module 212B so as to output the initial state e0. The causal reasoning module 210R may verify or process the (generic) causal graph according to a structural causal model or Bayesian network, then predict/infer a current/present state, and use the current/present state as the initial state e0 of the causal planning module 220P. As for how to determine the initial state e0, the present invention may use causal reasoning without constraining a causal graph. The present invention may use a structured causal model or Bayesian network to work with the generic causal graph and then predict (i.e., reason) a current/present state, which in turn is fed into the initial state of causal planning. A generic causal graph may be an unconstrained causal graph.

In one embodiment, the causal reasoning module 210R may include/use/configure only one of the SCM module 212SCM and the Bayesian network module 212B. The other one of the SCM module 212SCM and the Bayesian network module 212B may be removed/absent from the causal reasoning module 210R.

In one embodiment, similar to the causal graph CG, the causal reasoning module 210R may obtain/derive the (generic) causal graph from those related to information from the communication device 10UE or environmental data (e.g., channel properties of initial communication link(s), the number, position(s), or angle(s) of the communication device(s) 10UE or the antenna unit(s) Ueae, the number of antenna element(s) Nwae, the (maximum) number of group(s) that antenna elements Nwae may be divided into, the (maximum) number of antenna element(s) Nwae in a group, or whether the number of antenna element(s) Nwae in a group can be odd or even) based on maximum a posterior and point estimation.

As set forth above, an algorithm of a software of the server 20SVR may be divided into causal reasoning and causal planning. In the causal reasoning, an initial state may be inferred or deduced from high-dimensional environmental variables. In the causal planning, the planning may be done according to the initial state, such that a current/present state may be considered.

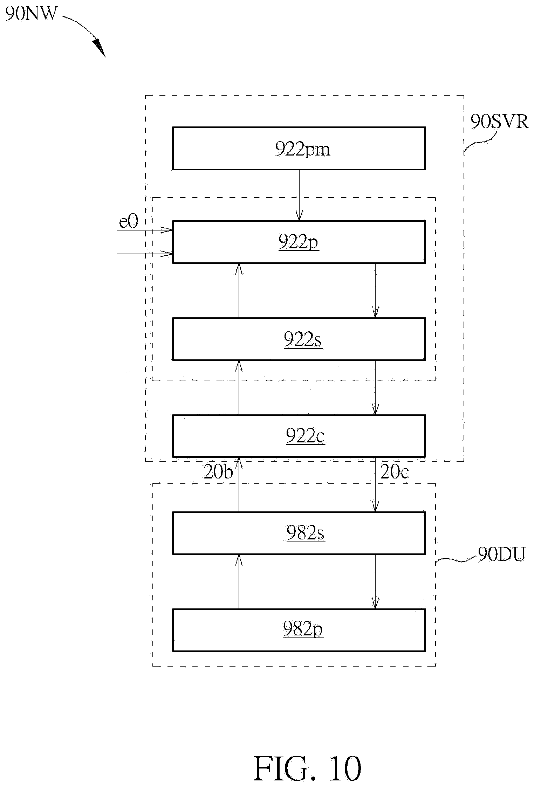

FIG. 10 is a schematic diagram of part of a network system 90NW according to an embodiment of the present invention. The network system 90NW may include a server 90SVR and a distributed unit 90DU. The network system 90NW may be used to implement the network systems 10NW or 20NW.

The distributed unit 90DU may include an application module 982p and a system module 982s. The application module 982p may output signal(s) of event(s) to the system module 982s and receive command(s) from the system module 982s. The system module 982s may output the observation data 20b to the server 90SVR and receive the action data 20c from the server 90SVR. In an embodiment, the distributed unit 90DU may be replaced by a radio unit or a combination of a distributed unit and a radio unit.

The server 90SVR may include a controller 922c, a scheduler 922s, a planner 922p, and a policy maker module 922pm. The controller 922c may convert the observation data 20b having been received into an extensible markup language (XML) format, and output an execution status of the XML format to the scheduler 922s accordingly. The scheduler 922s may convert the XML format of variable length into a format of fixed length, and may output signal(s) of reactivity (e.g., the grounding data 30g) to the planner 922p accordingly.

The planner 922p may output unscheduled plan(s) about what it/they may be to scheduler 922s (so as to offer information about which action(s)) according to the initial state e0, signal(s) of objective (for example, corresponding to the goal state sg), the signal(s) of reactivity from the scheduler 922s, and description of system from the policy maker module 922pm. The scheduler 922s may output scheduled plan(s) about when and how it/they may be to the controller 922c accordingly (so as to instruct how and when to offer information about action(s)).

In one embodiment, after the antenna unit(s) NWae is/are configured or arranged in step S204, the planner 922p may determine whether to re-plan according to the signal(s) of reactivity. If the planner 922p determines that re-planning is necessary (e.g., when the signal(s) of reactivity deviates from the signal(s) of objective), the server 90SVR may output the action data 20c (which is adjusted) to the distributed unit 90DU to rearrange the antenna unit(s) NWae. The objective may be decided by user(s) or related to the application scenario.

The planning method of the present invention may be compiled into a program code to be executed by a processing circuit of the network system 10NW (or server 20SVR), and stored in a storage circuit of the network system 10NW (or server 20SVR). In one embodiment, the storage circuit may be a read-only memory (ROM), a flash memory, a random access memory (RAM), or a hard disk, but is not limited thereto. In one embodiment, the processing circuit may be a central processing unit (CPU), a microprocessor, or an application-specific integrated circuit (ASIC), but is not limited thereto. In one embodiment, the server 20SVR may be an Oracle access manager (OAM) server, but is not limited thereto.

In one embodiment, an interface between a radio unit and a distributed unit may be an eCPRI interface, but is not limited thereto. For example, a CPRI interface may also be adopted.

In one embodiment, the communication device 120 may be the client side such as a user equipment (UE), a terminal equipment, a mobile station (MS), or a fixed or mobile device.

To sum up, the network system may use algorithms to continuously re-plan antenna elements according to channel properties of the communication link(s) so as to optimize the grouping of the antenna elements, and adopt one of spatial diversity, single-user multiplexing, multi-user multiplexing, single-user beamforming, and multi-user beamforming for the transmission of one group of antenna elements so as to optimize the transmission, thereby improving flexibility and efficiency.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. A planning method, for a network, **characterised by,** comprising:

   generating a constrained causal graph according to observation data of a plurality of communication devices (10UE), wherein a plurality of causal variables of the constrained causal graph and a causal structure of the constrained causal graph are determined together (S202); and
   performing finite domain representation planning by using the constrained causal graph to generate action data related to how to configure a plurality of antenna elements (Nwae), wherein the plurality of antenna elements (Nwae) are divided into a plurality of groups according to the action data, and one of the plurality of groups adopts spatial diversity, single-user multiplexing, multi-user multiplexing, single-user beamforming, or multi-user beamforming (S204).

2. The planning method of claim 1, **characterised in that,** the step of generating the constrained causal graph according to the observation data of the plurality of communication devices (10UE) comprises:

converting the observation data into grounding data; and
generating the constrained causal graph from the grounding data based on maximum a posteriori and point estimation.

3. The planning method of claim 2, **characterised in that,** the step of generating the constrained causal graph from the grounding data based on maximum a posteriori and point estimation comprises:
mapping a plurality of subdata in the grounding data to a plurality of causal variables of the constrained causal graph by using a plurality of observation functions.

4. The planning method of claim 3, **characterised in that,** the plurality of observation functions are obtained based on a causal semantic generative model.

5. The planning method of any of claims 1-4, **characterised in that,** the step of performing the finite domain representation planning using the constrained causal graph comprises:

converting a plurality of causal subgraphs into a plurality of two-dimensional matrices by using graph convolutional network;
converting the plurality of two-dimensional matrices into a plurality of first one-dimensional vectors; and
searching for a plurality of second one-dimensional vectors to make the constrained causal graph comprise at least one alternative branch, wherein each of the plurality of second one-dimensional vectors has smallest cosine similarity to one of the plurality of first one-dimensional vectors to serve as an alternative to the first one-dimensional vector.

6. The planning method of any of claims 1-5, **characterised in that,** the step of performing the finite domain representation planning by using the constrained causal graph comprises:
converting the constrained causal graph into a domain file of a planning domain description library to perform the finite domain representation planning.

7. The planning method of claim 6, **characterised in that,** a cause in the constrained causal graph corresponds to a precondition of an action in the domain file, and an effect instigated by the cause corresponds to an effect of the action in the domain file.

8. The planning method of any of claims 1-7, **characterised in that,** the step of performing the finite domain representation planning by using the constrained causal graph comprises:
determining a solution of the finite domain representation planning by using a planning tree corresponding to the constrained causal graph according to Bayesian optimization, Causal Bayesian optimization, or Dynamic Causal Bayesian Optimization.

9. The planning method of any of claims 1-8, **characterised in that,** the step of performing the finite domain representation planning using the constrained causal graph comprises:
performing the finite domain representation planning by using an initial state and the constrained causal graph.

10. The planning method of claim 9, **characterised in that,** the initial state is generated by using another causal graph according to a structural causal model or a Bayesian network.

11. The planning method of any of claims 1-10, **characterised in that,** a plurality of posterior probabilities of assigning a plurality of subdata of grounding data to a plurality of observation functions and the causal structure of the constrained causal graph are maximized to generate the constrained causal graph.

12. The planning method of any of claims 11, **characterised in that,** one of the plurality of posterior probabilities is proportional to

$$\prod_{t=0}^{T} P(w_{i,t}|s_{t-1}, C, f_i)^{(T-t)^{-\gamma}}$$

, where $w_{i,t}$ denotes one of the plurality of subdata, which is corresponding to one of the plurality of causal variables, at a time instant t, $s_{t-1}$ denotes at least one state at a time instant t-1, C denotes the causal structure, $f_i$ denotes a corresponding one of the observation functions, T denotes a current time instant, and $\gamma$ is a real number.

13. The planning method of any of claims 1-12, **characterised in that,** the planning method is executed by a server.

14. A communication device (10UE), comprising:

a storage circuit, configured to store instructions of a planning method of any one of the preceding claims 1-12; and

a processing circuit, coupled to the storage device, configured to execute the instructions stored in the storage circuit.

15. The communication device of claim 14, **characterised in that,** the communication device is a server.

**Amended claims in accordance with Rule 137(2) EPC.**

1. A planning method, for a network, **characterised by,** comprising:

generating a constrained causal graph according to observation data of a plurality of communication devices (10UE), wherein a plurality of causal variables of the constrained causal graph and a causal structure of the constrained causal graph are determined together (S202), and the observation data is related to channel properties; and

performing finite domain representation planning by using the constrained causal graph to generate action data related to how to configure a plurality of antenna elements (Nwae) of the network, wherein the plurality of antenna elements (Nwae) are divided into a plurality of groups according to the action data, and one of the plurality of groups adopts spatial diversity, single-user multiplexing, multi-user multiplexing, single-user beamforming, or multi-user beamforming (S204).

2. The planning method of claim 1, **characterised in that,** the step of generating the constrained causal graph according to the observation data of the plurality of communication devices (10UE) comprises:

converting the observation data into grounding data; and

generating the constrained causal graph from the grounding data based on maximum a posteriori and point estimation.

3. The planning method of claim 2, **characterised in that,** the step of generating the constrained causal graph from the grounding data based on maximum a posteriori and point estimation comprises:

mapping a plurality of subdata in the grounding data to a plurality of causal variables of the constrained causal graph by using a plurality of observation functions.

4. The planning method of claim 3, **characterised in that,** the plurality of observation functions are obtained based on a causal semantic generative model.

5. The planning method of any of claims 1-4, **characterised in that,** the step of performing the finite domain representation planning using the constrained causal graph comprises:

converting a plurality of causal subgraphs into a plurality of two-dimensional matrices by using graph convolutional network;

converting the plurality of two-dimensional matrices into a plurality of first one-dimensional vectors; and

searching for a plurality of second one-dimensional vectors to make the constrained causal graph comprise at least one alternative branch, wherein each of the plurality of second one-dimensional vectors has smallest cosine similarity to one of the plurality of first one-dimensional vectors to serve as an alternative to the first one-dimensional vector.

6. The planning method of any of claims 1-5, **characterised in that,** the step of performing the finite domain representation planning by using the constrained causal graph comprises:

converting the constrained causal graph into a domain file of a planning domain description library to perform the finite domain representation planning.

7. The planning method of claim 6, **characterised in that,** a cause in the constrained causal graph corresponds to a precondition of an action in the domain file, and an effect instigated by the cause corresponds to an effect of the action in the domain file.

8. The planning method of any of claims 1-7, **characterised in that,** the step of performing the finite domain representation planning by using the constrained causal graph comprises:

determining a solution of the finite domain representation planning by using a planning tree corresponding to the constrained causal graph according to Bayesian optimization, Causal Bayesian optimization, or Dynamic Causal Bayesian Optimization.

9. The planning method of any of claims 1-8, **characterised in that,** the step of performing the finite domain representation planning using the constrained causal graph comprises:

performing the finite domain representation planning by using an initial state and the constrained causal graph.

10. The planning method of claim 9, **characterised in that,** the initial state is generated by using another causal graph according to a structural causal model or a Bayesian network.

**11.** The planning method of any of claims 1-10, **characterised in that,** a plurality of posterior probabilities of assigning a plurality of subdata of grounding data to a plurality of observation functions and the causal structure of the constrained causal graph are maximized to generate the constrained causal graph.

**12.** The planning method of any of claims 11, **characterised in that,** one of the plurality of posterior probabilities is proportional to

$$\prod_{t=0}^{T} P(w_{i,t} | s_{t-1}, C, f_i)^{(T-t)^{-\gamma}}$$

, where $w_{i,t}$ denotes one of the plurality of subdata, which is corresponding to one of the plurality of causal variables, at a time instant t, $s_{t-1}$ denotes at least one state at a time instant t-1, C denotes the causal structure, $f_i$ denotes a corresponding one of the observation functions, T denotes a current time instant, and $\gamma$ is a real number.

**13.** The planning method of any of claims 1-12, **characterised in that,** the planning method is executed by a server.

**14.** A communication device (10UE), **characterised by,** comprising:

   a storage circuit, configured to store instructions of a planning method of any one of the preceding claims 1-12; and
   a processing circuit, coupled to the storage device, configured to execute the instructions stored in the storage circuit.

**15.** The communication device of claim 14, **characterised in that,** the communication device is a server.

(a)

(b)

10NW

10NW

NWae
NWae

NWae

10UE
UEae

Spatial diversity

Beamforming

UEae

10UE

UEae

10UE
10UE

Spatial diversity

Spatial
multiplexing

UEae

10UE

Beamforming

UEae

10UE

Spatial
multiplexing

UEae

10UE

EP 4 376 318 A1

FIG. 1

FIG. 2

FIG. 3

FIG. 4

EP 4 376 318 A1

FIG. 5

(a)                                        (b)

CG($\pi$)                                 CG($\pi$)

FIG. 6

FIG. 7

FIG. 8

FIG. 9

90NW

90SVR

922pm

e0

922p

922s

922c

20b          20c

982s

90DU

982p

FIG. 10

**EP 4 376 318 A1**

Europäisches
Patentamt

European
Patent Office

Office européen
des brevets

# EUROPEAN SEARCH REPORT

Application Number

EP 23 16 2501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/294511 A1 (ALI ANUM [US] ET AL) 15 September 2022 (2022-09-15) * paragraph [0037] * * paragraph [0091] * * claims 8,12 * | 1-15 | INV. H04B7/06 |
| Y | CHRISTIAN TOTH ET AL: "Active Bayesian Causal Inference", ARXIV.ORG, CORNELL UNIVERSITY LIBRARY, 201 OLIN LIBRARY CORNELL UNIVERSITY ITHACA, NY 14853, 4 June 2022 (2022-06-04), XP091240078, * chapters 2-4, Appendix, part D * | 1-15 | |
| A | JOHANN BREHMER ET AL: "Weakly supervised causal representation learning", ARXIV.ORG, CORNELL UNIVERSITY LIBRARY, 201 OLIN LIBRARY CORNELL UNIVERSITY ITHACA, NY 14853, 30 May 2022 (2022-05-30), XP091228380, * chapters 1,3 and 4 * * chapter D.1; page 26 * | 1-15 | |
| A | JAGANNATH JITHIN ET AL: "Machine learning for wireless communications in the Internet of Things: A comprehensive survey", AD HOC NETWORKS, ELSEVIER, AMSTERDAM, NL, vol. 93, 11 June 2019 (2019-06-11), XP085750193, ISSN: 1570-8705, DOI: 10.1016/J.ADHOC.2019.101913 [retrieved on 2019-06-11] * chapter 2.2.5 * * chapter 3.2.3 Adaptive array processing * | 1-15 | |

**TECHNICAL FIELDS SEARCHED (IPC)**

H04B

-----

-/--

The present search report has been drawn up for all claims

| Place of search | Date of completion of the search | Examiner |
|---|---|---|
| Munich | 9 November 2023 | Sieben, Stefan |

EPO FORM 1503 03.82 (P04C01)

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

page 1 of 2

Europäisches
Patentamt

European
Patent Office

Office européen
des brevets

# EUROPEAN SEARCH REPORT

Application Number

EP 23 16 2501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHAOLI ZHANG ET AL: "NetRCA: An Effective Network Fault Cause Localization Algorithm", ARXIV.ORG, CORNELL UNIVERSITY LIBRARY, 201 OLIN LIBRARY CORNELL UNIVERSITY ITHACA, NY 14853, 23 February 2022 (2022-02-23), XP091163786, * the whole document * | 1-15 | |
| A | US 2022/085864 A1 (YING ZHINONG [SE] ET AL) 17 March 2022 (2022-03-17) * paragraph [0020] – paragraph [0021]; figure 1A * | 1-15 | |

TECHNICAL FIELDS
SEARCHED      (IPC)

The present search report has been drawn up for all claims

| Place of search | Date of completion of the search | Examiner |
|---|---|---|
| Munich | 9 November 2023 | Sieben, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 16 2501

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| US 2022294511 | A1 | 15-09-2022 | US 2022294511 | A1 | 15-09-2022 |
| | | | WO 2022186509 | A1 | 09-09-2022 |
| US 2022085864 | A1 | 17-03-2022 | CN 113273093 | A | 17-08-2021 |
| | | | EP 3903425 | A1 | 03-11-2021 |
| | | | JP 7258153 | B2 | 14-04-2023 |
| | | | JP 2022515631 | A | 21-02-2022 |
| | | | US 2022085864 | A1 | 17-03-2022 |
| | | | WO 2020139360 | A1 | 02-07-2020 |

EPO FORM P0459

For more details about this annex : see Official Journal of the European Patent Office, No. 12/82